# EUROPÄISCHE PATENTSCHRIFT

(11) **EP 1 006 283 B1**
(45) Veröffentlichungstag und Bekanntmachung des Hinweises auf die Patenterteilung: **10.01.2007**
(21) Anmeldenummer: 99123040.0
(22) Anmeldetag: 19.11.1999
(51) Int. Cl.: F15B 15/02, G21C 13/036

(54) **Vorrichtung zum Abdichten eines Rohres, insbesondere eines Lanzenschaftes**
Device for sealing a tube in particular an instrumentation column
Dispositif pour étanchéir un tube, en particulier une colonne d'instrumentation

(30) Priorität: 02.12.1998 DE 19855672
(43) Veröffentlichungstag der Anmeldung: 07.06.2000
(73) Patentinhaber: Framatome ANP GmbH, 91058 Erlangen (DE)
(72) Erfinder: Zuch, Gerhard, Dipl.-Ing., 90766 Fürth (DE)
(74) Vertreter: Tergau & Pohl Patentanwälte

(56) Entgegenhaltungen:
- WO-A-93/18522
- GB-A- 2 299 641
- US-A- 3 851 906
- US-A- 5 084 228

## Beschreibung

Die Erfindung betrifft eine Vorrichtung zum Abdichten eines Rohres, insbesondere eines Lanzenschaftes, in einer Öffnung, die sich in einem Bauteil, insbesondere in einem mit einem Reaktordruckbehälterdeckel verbundenen Stutzen befindet, wobei ein Anpresselement mit dem Rohr in Wirkverbindung steht, zum Anpressen des Rohres an das Bauteil.

Für verschiedenartige Anwendungsfälle ist es üblich, ein Rohr flüssigkeitsdicht oder sogar gasdicht mit einem Bauteil zu verbinden, das Teil eines Behälters ist. Ein solcher Behälter kann der Reaktordruckbehälter eines Kernkraftwerkes und das Bauteil kann ein Stutzen sein, der mit dem Reaktordruckbehälterdeckel verbunden ist. Das Rohr kann ein Lanzenschaft sein, durch den z.B. Messsonden oder Kabel geführt sein können. Gerade bei einer Anwendung in einem Kernkraftwerk ist es notwendig, dass das Rohr, insbesondere der Lanzenschaft, dicht mit dem Bauteil verbunden ist.

Andererseits ist bei einer Revision im Kernkraftwerk erforderlich, dass die dichte Verbindung zwischen Lanzenschaft und Deckelstutzen geöffnet und nach einer gründlichen Untersuchung wieder verschlossen wird. Das ordnungsgemäße Verschließen erfordert, dass die Wirkung des Anpresselementes überprüft wird.

Bisher war es üblich, als Anpresselemente Druckschrauben einzusetzen, die aufwendig und nur durch Personal zu montieren sind. Zur Überprüfung eines Anpresselements mussten von Hand mechanische Messschieber eingesetzt werden, was in einem Kernkraftwerk den Einsatz von Personal mit Schutzkleidung erforderte und zeitaufwendig war.

Eine Vorrichtung der genannten Art ist beispielsweise bekannt aus der US 5,084,228.

Der Erfindung liegt die Aufgabe zugrunde, zum Abdichten eines Rohres in einer Öffnung eine Vorrichtung anzugeben, die, insbesondere auch bei einer Überprüfung, ohne oder nur mit geringem Personaleinsatz an der Dichtung selbst auskommt und trotzdem schnell und zuverlässig handhabbar ist.

Die Aufgabe wird gemäß der Erfindung durch eine Vorrichtung gemäß Ansprüch 1 gelöst.

Damit wird der Vorteil erzielt, dass das Anpresselement ferngesteuert bewegt werden kann. Durch über eine Rohrleitung herangeführtes Hydraulikmittel, das in der Regel eine Flüssigkeit ist, wird das Anpresselement bewegt, ohne dass eine Person unmittelbar am Anpresselement tätig sein muss.

Das Anpresselement umfasst beispielsweise eine Tellerfeder, die zwischen dem Bauteil und einem eine Kraft erzeugenden Anpressteil angeordnet ist. Dieses Anpressteil kann ein Hydraulikzylinder sein. Die Tellerfeder erzeugt eine Vorspannkraft, die zu einer dichten Verbindung beiträgt.

Wenn nach einer Revision das Rohr, insbesondere der Lanzenschaft, in dem Bauteil, insbesondere im Stutzen des Reaktordruckbehälterdeckels, wieder angeordnet worden ist, muss auch die Vorspannkraft der Tellerfeder neu eingestellt und überprüft werden. Mit der Vorrichtung nach der Erfindung kann das vorteilhafterweise hydraulisch und damit ferngesteuert über eine Hydraulikleitung geschehen.

Zur Messung der Vorspannkraft der Tellerfeder ist beispielsweise mit einer Hydraulikleitung des Anpresselementes ein Druckmesser verbunden. Der dort gemessene Druck des Mediums in der Hydraulikleitung lässt unmittelbar auf die Vorspannkraft der Tellerfeder schließen. Durch ein einfaches Anpassen des Druckes, z.B. mittels einer Pumpe, kann die Vorspannkraft verändert werden.

Mit der Erfindung wird insbesondere der Vorteil erzielt, dass das Abdichten und sogar gegebenenfalls das Überprüfen und Einstellen einer Vorspannkraft von Tellerfedern über eine Hydraulikleitung schnell und zuverlässig erfolgen kann. Der Einsatz von Personal mit umfangreicher Schutzkleidung unmittelbar am Bauteil, das Teil eines Reaktordruckbehälters eines Kernkraftwerkes sein kann, ist vorteilhafterweise nicht erforderlich.

Ein Beispiel für eine Vorrichtung nach der Erfindung wird anhand der Zeichnung näher erläutert. Dabei zeigt die
Figur 1 eine als Stand der Technik geltende Vorrichtung zum Abdichten eines Rohres in einer Öffnung und
Figur 2 zeigt eine dem gleichen Zweck dienende Vorrichtung, die die Merkmale der Erfindung aufweist.
Figur 3 zeigt ein hydraulisches Werkzeug, das die Vorrichtung der Figur 2 betreibt.

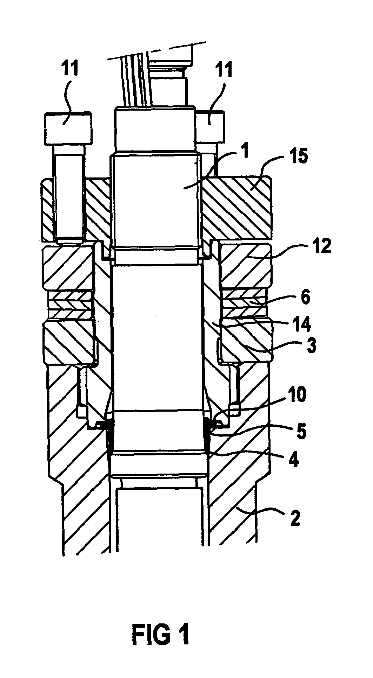

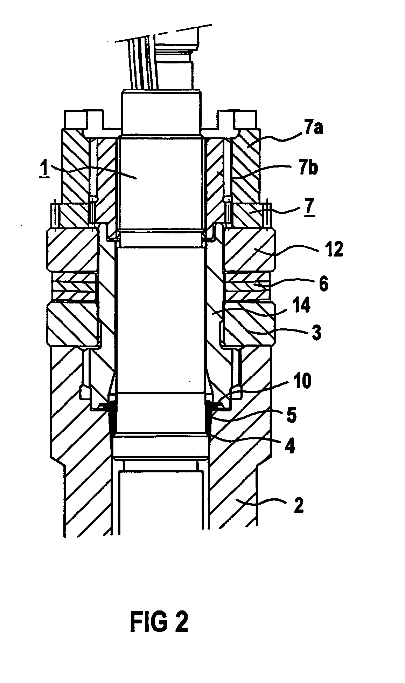

Die Figuren 1 und 2 zeigen in gleicher Weise einen Lanzenschaft 1, der die Form eines Rohres hat. In diesem Lanzenschaft 1 können Messlanzen angeordnet sein, die Sensoren tragen. Diese Sensoren bestimmen den Zustand innerhalb eines Reaktordruckbehälters. Der Lanzenschaft ist druckdicht von außen in einen Reaktordruckbehälter hineingeführt. Dazu ist er in einem Stutzen 2 des Reaktordruckbehälterdeckels geführt und gegen diesen Stutzen 2 abgedichtet.

Die Abdichtung ist gewährleistet durch Anpressen des Dichtringes 5 über eine Anformung 4 am Lanzenschaft 1 in einen Sitz 10 am mit dem Stutzen 2 verbundenen Einschraubstutzen 14, wobei der Dichtring 5 am Stutzen 2 ebenfalls angepresst ist. Zum Anpressen wird eine Kraft auf eine Druckplatte 3 ausgeübt, die am Stutzen 2 anliegt, was dazu führt, dass mittels einer mechanischen Kraftübertragung eine entgegengerichtete Kraft auf den Lanzenschaft 1 ausgeübt wird, die dessen Anformung 4 gegen den Sitz 10 presst.

Die Kraft auf die Druckplatte 3 wird beim Bekannten (Figur 1) über Druckschrauben 11 erzeugt.Zur mechanischen Kraftübertragung auf den Lanzenschaft 1 ist eine Platte 15 vorhanden, die mit dem Lanzenschaft 1 fest verbunden ist und Gewinde zur Aufnahme der Druckschrauben 11 aufweist. Beim Einschrauben der Druckschrauben 11 werden diese Platte 15 und damit auch der Lanzenschaft 1 angehoben. Die Kombination aus Druckschraube 11 und Platte 15 bildet die Grundform eines Anpresselementes.

Die Druckschrauben 11 wirken nicht direkt auf die Druckplatte 3, sondern auf eine zusätzliche Druckplatte 12, wobei sich zwischen der Druckplatte 3 und der zusätzlichen Druckplatte 12 eine oder mehrere Tellerfedern 6 befinden. Die Tellerfedern 6 gewährleisten eine Vorspannkraft, die durch die Kraft der Druckschrauben 11 ergänzt wird. Das Anpresselement kann aus Druckschraube 11, Platte 15 und Tellerfedern 6 bestehen. Die Vorspannkraft der Tellerfedern 6 muss nach jeder Revision neu eingestellt werden, was zusätzliche Arbeiten an der Vorrichtung notwendig macht, die unter Schutzvorkehrungen erfolgen müssen.

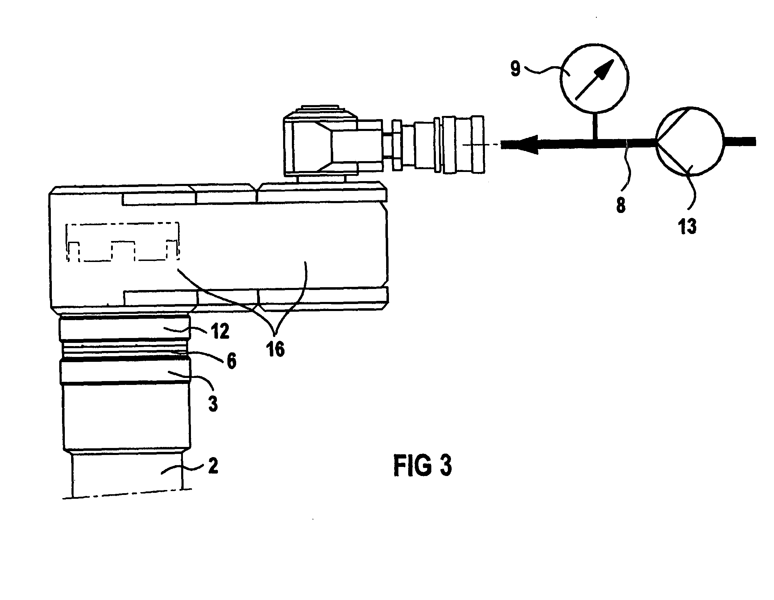

Die Vorrichtung nach der Erfindung (Figur 2) weist entsprechend auch eine zusätzliche Druckplatte 12 und eine oder mehrere Tellerfedern 6 auf, die in gleicher Weise angeordnet sind. Der Unterschied gegenüber dem Bekannten besteht darin, dass an die Stelle der Druckschrauben 11 Anpressteile 7 treten, die hydraulisch betätigt werden (Figur 3) . Es kann sich z.B. um sogenannte HYTORC-Muttern handeln. Ein Anpressteil 7 bildet allein die Grundform eines Anpresselements. Ein Anpressteil 7 und Tellerfedern 6 können dann zusammen das Anpresselement bilden, wobei das Anpressteil 7 eine Kraft und die Tellerfedern 6 eine Vorspannkraft (Vorspannung) erzeugen. Zur mechanischen Kraftübertragung vom Anpressteil 7 auf den Lanzenschaft 1 weist das Anpressteil 7 zwei sich gegenläufig bewegende Teile auf. Wenn das äußere Teil 7a nach unten bewegt wird, wird das innere Teil 7b angehoben und nimmt den Lanzenschaft 1 mit, da es mit ihm fest verbunden ist.

Zum Betreiben der Anpressteile 7 wird ein hydraulisches Werkzeug 16 (Figur 3) verwendet, das mit einer Hydraulikleitung 8 verbunden ist, in der eine Pumpe 13 für das Hydraulikmittel eingebaut ist. An der Hydraulikleitung 8 ist ein Druckmesser 9 angeschlossen. Dieser misst den Druck des Hydraulikmittels, was Rückschlüsse auf die momentane Vorspannkraft der Tellerfedern 6 zulässt. Durch Verändern des Druckes mittels der Pumpe 13 kann die Vorspannkraft der Tellerfedern eingestellt werden. Das hydraulische Werkzeug 16 überdeckt oder umgibt den oberen Teil des Lanzenschaftes 1 und das gesamte Anpressteil 7 und liegt auf der zusätzlichen Druckplatte 12 auf, die als Ring ausgebildet den in Figur 2 gezeigten Lanzenschaft 1 umgibt. Der Lanzenschaft 1 erstreckt sich, in Figur 3 nicht sichtbar, innerhalb des rohrförmigen Stutzens 2 und gegebenenfalls auch innerhalb der Druckplatte 3, der Tellerfedern 6 und der zusätzlichen Druckplatte 12, die alle den Lanzenschaft 1 ringförmig umgeben.

Das hydraulische Werkzeug 16 (Figur 3) kann eine Öffnung aufweisen, durch die der Lanzenschaft 1 nach oben hindurchtreten kann.

Mit der Vorrichtung nach der Erfindung kann einerseits eine Abdichtung des Lanzenschaftes 1 im Stutzen 2 allein über die Hydraulikleitung 8 und mit der Pumpe 13 ferngesteuert schnell und zuverlässig erfolgen, und es kann darüber hinaus mit dem Druckmesser 9 die Vorspannkraft der Tellerfedern 6 überwacht und mit der Pumpe 13 verändert bzw. eingestellt werden. Es ist vorteilhafterweise nicht erforderlich, dass Personal in Schutzanzügen unmittelbar an der Durchführung.tätig ist.

## Patentansprüche

1. Vorrichtung zum Abdichten eines Lanzenschaftes (1) in einer Öffnung, die sich in einem mit einem Reaktordruckbehälterdeckel verbundenen Stutzen (2) befindet, wobei die Vorrichtung ein mit dem Lanzenschaft in Wirkverbindung stehendes Anpresselement aufweist, zum Anpressen eines Dichtringes (5) über eine Anformung (4) am Lanzenschaft in einen Sitz (10) an einen mit dem Stutzen verbundenen Einschraubstutzen (14) wobei über das Anpresselement eine Kraft auf eine auf den Stutzen anliegende Druckplatte (3) ausübbar ist
**dadurch gekennzeichnet, daß**
das Anpresselement einen Hydraulikzylinder und eine eine Vorspannkraft erzeugende Tellerfeder (6) umfaßt und die Tellerfeder (6) zwischen einer zusätzlichen Druckplatte (12) und der Druckplatte (3) angeordnet ist und wobei mittels des Anpresselements die Kraft über die zusätzliche Druckplatte (12) und die Tellerfeder (6) auf die Druckplatte (3) ausübbar ist.

2. Vorrichtung nach Anspruch 1,
**dadurch gekennzeichnet, dass** zur Messung der Vorspannkraft der Tellerfeder (6) mit einer Hydraulikleitung (8), die zum Anpresselement führt, ein Druckmesser (9) verbunden ist.

## Claims

1. Apparatus for sealing a lance shaft (1) in an opening located in a connection piece (2) connected to a reactor pressure vessel lid, the apparatus having a pressure element operatively connected to the lance shaft, for pressing a sealing ring (5) via a moulded projection (4) on the lance shaft into a seat (10) onto a screw-in connection piece (14) connected to the connection piece, wherein a force can be exerted, via the pressure element, on a pressure plate (3) resting on the connection piece, **characterized in that** the pressure element comprises a hydraulic cylinder and a disc spring (6) generating a prestressing force and the disc spring (6) is arranged between an additional pressure plate (12) and the pressure plate (3) and wherein the force can be exerted on the pressure plate (3) by means of the pressure element via the additional pressure plate (12) and the disc spring (6).

2. Apparatus according to Claim 1, **characterized in that** a pressure measuring device (9) is connected to a hydraulic line (8) leading to the pressure element for measuring the prestressing force of the disc spring (6).

## Revendications

1. Dispositif pour rendre étanche une colonne d'instrumentation (1) dans une ouverture, qui se trouve dans un montant (2) relié à un couvercle d'enceinte de réacteur sous pression, le dispositif comportant un élément de pression coopérant avec la colonne d'instrumentation et destiné à presser une bague (5) d'étanchéité par un épaulement (4) de la colonne d'instrumentation dans un siège (10) d'un montant (14) fileté relié au montant, une force pouvant être appliquée par l'élément de pression à un plateau (3) de pression reposant sur le montant, **caractérisé en ce que** l'élément de pression comporte un vérin hydraulique et un ressort (5) à disques (6) produisant une force de mise sous tension préalable et le ressort (6) à disque est disposé entre un plateau (12) de pression supplémentaire et le plateau (3) de pression, et dans lequel, au moyen de l'élément de pression, la force est appliquée au plateau (3) de pression par l'intermédiaire du plateau (12) de pression supplémentaire et du ressort (6) à disques.

2. Dispositif suivant la revendication (1), **caractérisé en ce que**, pour mesurer la force de mise sous tension préalable, un dispositif (9) de mesure de pression est relié à un conduit (8) hydraulique qui mène à l'élément de pression.
